# EUROPEAN PATENT APPLICATION

(11) **EP 3 738 869 A1**
(43) Date of publication of application: **18.11.2020**
(21) Application number: 20161685.1
(22) Date of filing: 08.03.2020
(51) Int. Cl.: B62M 17/00, B62M 3/00, B62M 6/50, B62K 19/34, F16D 41/30

(54) **TRANSMISSION SHAFT SYSTEM OF ELECTRIC BICYCLE**

(30) Priority: 17.05.2019 CN 201920717195 U
(71) Applicant: G-Force Inc, Colorado Springs, CO 80918 (US)
(72) Inventor: Wang, Xin, Xuzhou City, Jiangsu Province 221200 (CN)
(74) Representative: Vesterinen, Jussi Tapio

(57) **Abstract**

A transmission shaft system of an electric bicycle comprises a transmission rod (11), a five-way base and a rear gearbox (3). The five-way base comprises a five-way base body (24), a five-way base cylinder (25), a left lock ring (26), and a right cover (27). The five-way base cylinder is sleeved on the outer peripheral surface of the five-way base body. The left lock ring and the right cover are connected to both ends of the five-way base body by threads. Both ends of a mandrel (21) protrude from the left lock ring and the right cover, respectively, and a five-way gear (22) is sleeved on the surface of the mandrel. The five-way gear is rotatably connected to the five-way base body and is meshed with a front transmission gear (13). The inner peripheral surface of the five-way gear is provided with ratchet teeth (231). A pawl (232) is provided on the surface of the mandrel by an elastic member (233), and the pawl is abutted against the ratchet teeth. One end of the five-way gear extends and is provided with an extended sleeve (28) sleeved on the surface of the mandrel. The present invention adopts a split design, a unidirectional transmission, and it is convenient to mount and replace a hub, and is firm in structure.

## Description

This application claims priority from a Chinese patent application filed to the State Intellectual Property Office of the People's Republic of China on May 17, 2019, with application number 201920717195X and patent title "Transmission Shaft of Electric Vehicle", the entire content of which is incorporated herein by reference.

### TECHNICAL FIELD

The present invention relates to the field of electric bicycles, in particular to a transmission shaft of an electric bicycle.

### BACKGROUND

The transmission rod device of the rear motor of the conventional electric bicycle is mainly designed as an integral clutch device at the five-way center shaft. Because the center shaft mandrel and the ratchet pawl are on the same rotating body, although the clutch function can be achieved, there are too many parts, the assembly is complicated, and it is too dependent on the hand feel of the mounter. There are defects such as large cumulative tolerance, high product failure rate, low service life, and high maintenance costs.

### SUMMARY

In order to solve the above problems, the present invention provides a transmission shaft of an electric vehicle which is split in design and unidirectional in transmission, easy to mount and replace a hub, and is strong in structure.

In order to achieve the above purpose, the technical solution adopted by the present invention is: a transmission shaft of an electric vehicle, comprising a transmission rod, a five-way base, and a rear gearbox, wherein the five-way base is provided with a mandrel, both ends of the transmission rod are provided with a front transmission gear and a rear transmission gear, respectively, and the front transmission gear is provided in the five-way base, wherein the five-way base comprises a five-way base body, a five-way base cylinder, a left lock ring, and a right cover, the five-way base cylinder is sleeved on the outer peripheral surface of the five-way base body, the left lock ring and the right cover are connected to both ends of the five-way base body by threads, both ends of the mandrel protrude from the left lock ring and the right cover, respectively, a five-way gear is sleeved on the surface of the mandrel, the five-way gear is rotatably connected to the five-way base body and is meshed with a front transmission gear, a ratchet mechanism is provided between the mandrel and the five-way gear, the ratchet mechanism comprises a ratchet tooth, a pawl, and an elastic member, the inner peripheral surface of the five-way gear is provided with ratchet teeth, the pawl is provided on the surface of the mandrel by an elastic member, the pawl is abutted against the ratchet teeth, and one end of the five-way gear extends and is provided with an extended sleeve sleeved on the surface of the mandrel.

Specifically, an inner end of the pawl is provided as an arc-shaped end surface, the arc-shaped end surface is in cambered surface sliding contact with the surface of the mandrel, and the outer end of the pawl is abutted against the ratchet teeth.

Specifically, the elastic member is an annular tightening clamp spring with an opening, the surface of the mandrel is provided with an annular protrusion, the annular protrusion is provided with a mounting groove of the pawl, the annular protrusion is provided with an annular groove along the circumferential direction of the side surface thereof, the annular groove is communicated with the mounting groove of the pawl, an arc groove is provided in the mounting groove of the pawl, an arc-shaped end surface of the pawl is provided in the arc groove, the pawl is provided with a spring groove, the annular tightening clamp spring is clamped on the annular groove and the spring groove, and the outer end of the pawl is pushed outward on the ratchet teeth under the elastic force of the annular tightening clamp spring.

Specifically, the elastic member is a torsion spring, one end of the torsion spring is abutted against the surface of the mandrel, the other end of the torsion spring is abutted against the outer end of the pawl, and the outer end of the pawl is pushed outward on the ratchet teeth under the elastic force of the torsion spring.

Specifically, the ratchet mechanism comprises at least three pawls, and the three pawls are evenly distributed along the circumferential direction of the surface of the mandrel.

Specifically, the pawl is comma-shaped.

Specifically, a connecting pipe is provided on the outside of the transmission rod, and both ends of the connecting pipe are fixedly connected to the five-way base and the rear gearbox, respectively.

Specifically, both ends of the mandrel are rotatably connected to the five-way base body through bearings, oil seals are sleeved on both ends of the mandrel, and the oil seals are pressed between the bearing and the five-way base body.

Specifically, the left lock ring is provided with an internal thread, the right cover is provided with an external thread, and both ends of the five-way base body are provided with corresponding external threads and internal threads, respectively.

Specifically, a rotation speed sensor is sleeved at one end of the mandrel extending out of the five-way base body.

The beneficial effects of this present invention are as follows:
1) The ratchet mechanism is used to realize the unidirectional torque transmission of the bicycle. When riding an electric bicycle equipped with the device, the rider can step the pedal at will; when the rider slides when being not driven, the pedal is always stationary, which will not cause hidden danger to human body.
2) The present invention provides a transmission shaft of an electric vehicle using a split design, which is more conducive to the fastening and operation of each component, and greatly reduces the situation of damage together. It is firmer in structure, more powerful in function, more convenient to mount, and is basically maintenance-free, which can ensure the normal use for more than five years without damage.
3) When the clutch is operating, a clear working sound (the sound of the pawl hitting the ratchet gear ring) can be heard, which enables the rider to more effectively discern which riding state it belongs to.
4) The present invention is mainly used under the defect that the rear drive motor itself has no clutch device, and the clutch device of the transmission shaft of an electric vehicle is used to realize the clutch function of the electric vehicle. It can be freely matched with any electric hub on the market in assembly and matching, and can be used directly without adding any additional parts.
5) One end of the five-way gear extends and is provided with an extended sleeve sleeved on the surface of the mandrel, so that the five-way gear is more balanced in force during operation and runs more smoothly.

### BRIEF DESCRIPTION OF THE DRAWINGS

FIG. 1 is an exploded diagram of a structure according to the present invention;
FIG. 2 is a schematic structural diagram of a mandrel and a ratchet mechanism according to the present invention;
FIG. 3 is a schematic diagram of a cross-sectional structure of a five-way base body and its internal parts according to the present invention;
FIG. 4 is an exploded diagram of a five-way base body and its internal parts according to the present invention;
FIG. 5 is a schematic diagram of the meshing state of a front transmission gear and a five-way gear according to the present invention;
FIG. 6 is a top diagram of a ratchet mechanism according to the present invention.

### Description of reference numbers

3-a rear gearbox; 4-a rear hub;
11-a transmission rod; 12-a connecting pipe; 13-a front transmission gear; 14-a rear transmission gear; 15-a front joint; 16-a rear joint;
21-a mandrel; 22-a five-way gear; 24-a five-way base body; 25-a five-way base cylinder; 26-a left lock ring; 27-a right cover; 28-an extended sleeve; 29-a rotation speed sensor;
211-an annular protrusion; 212-a mounting groove of the pawl; 213-an annular groove; 214-an arc groove;
231-a ratchet teeth; 232-a pawl; 233-an elastic member; 234-a spring groove;
41-a rear hub gear; 42-a gasket; 43-a dust cover
51-a bearing; 52-an oil seal.

### DESCRIPTION OF THE EMBODIMENTS

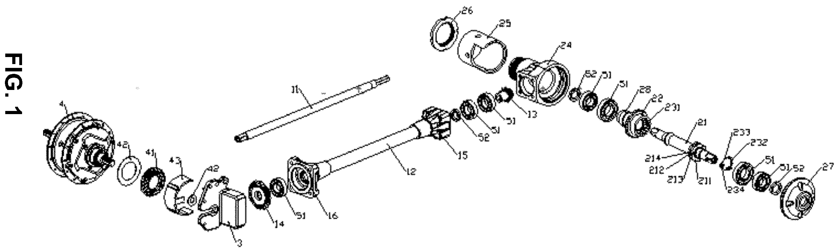

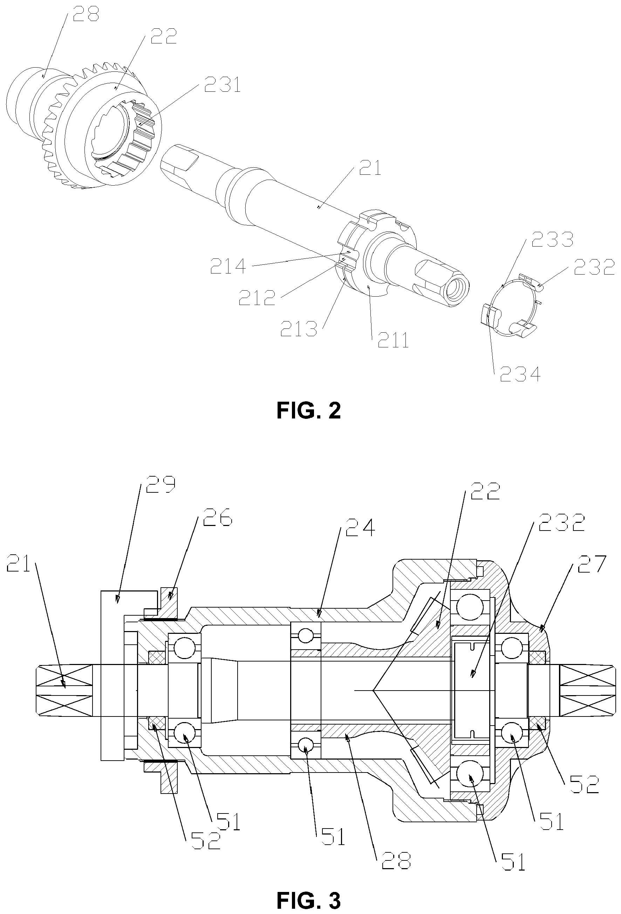

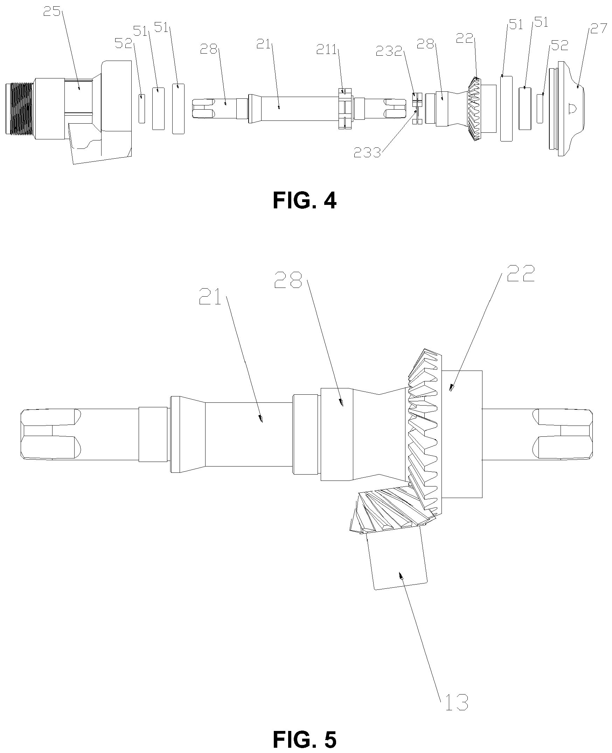

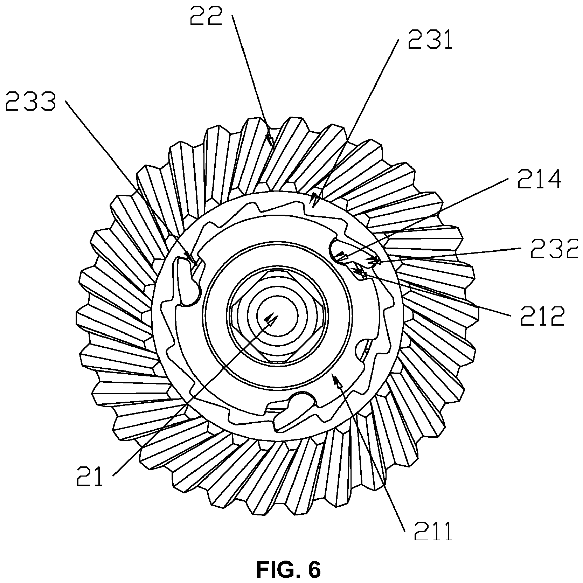

Refer to FIGS. 1-6. The present invention relates to a transmission shaft 11 of an electric vehicle, which comprises a transmission rod 11, a five-way base and a rear gearbox 3. The five-way base is provided with a mandrel 21, both ends of the transmission rod 11 are provided with a front transmission gear 13 and a rear transmission gear 14, respectively, and the front transmission gear 13 is provided in the five-way base. The five-way base comprises a five-way base body 24, a five-way base cylinder 25, a left lock ring 26, and a right cover 27, the five-way base cylinder 25 is sleeved on the outer peripheral surface of the five-way base body 24, the left lock ring 26 and the right cover 27 are connected to both ends of the five-way base body 24 by threads, both ends of the mandrel 21 protrude from the left lock ring 26 and the right cover 27, respectively, a five-way gear 22 is sleeved on the surface of the mandrel 21, one end of the five-way gear 22 extends and is provided with an extended sleeve 28 sleeved on the surface of the mandrel 21, the five-way gear 22 is rotatably connected to the five-way base body 24 and is meshed with a front transmission gear 13, a ratchet mechanism is provided between the mandrel 21 and the five-way gear 22, the ratchet mechanism comprises a ratchet tooth 231, a pawl 232, and an elastic member 233, the inner peripheral surface of the five-way gear 22 is provided with ratchet teeth 231, the pawl 232 is provided on the surface of the mandrel 21 by an elastic member 233, the pawl 232 is abutted against the ratchet teeth 231, one end of the five-way gear 22 extends and is provided with an extended sleeve 28 sleeved on the surface of the mandrel 21, and the five-way sleeve 28 is rotatably connected to the five-way base body 24.

Both ends of the transmission rod 11 are located in the five-way base body 24 and the rear gearbox 3, respectively, and are provided with a front transmission gear 13 and a rear transmission gear 14, respectively. Both ends of the transmission rod 11 are provided with bearings 51, respectively, to support its rotation. The front transmission gear 13 is located in the five-way base, and the rear transmission gear 14 is located in the rear gearbox 3. The five-way base is provided with a mandrel 21, which is the center shaft of the bicycle. Both ends of the mandrel 21 are connected to the two pedals of the bicycle through a crank, respectively. Both ends of the mandrel 21 are respectively provided with bearings 51 to support their rotation. The above contents are the prior art, which will not be described in detail herein again.

A five-way gear 22 is rotatably provided on the mandrel 21, and the five-way gear 22 is meshed with the front transmission gear 13. A ratchet mechanism is provided between the mandrel 21 and the five-way gear 22. The ratchet mechanism comprises three pawls 232, ratchet teeth 231, and an elastic member 233. The inner peripheral wall of the five-way gear 22 is provided with ratchet teeth 231. The elastic member 233 is provided between the mandrel 21 and the pawl 232, and the inner end of the pawl 232 is rotatably provided on the outer side wall of the mandrel 21. Under the elastic force of the elastic member 233, the outer end of the pawl 232 is opened outward. During transmission, the outer end of the pawl 232 is meshed with the ratchet teeth 231.

Specifically, an inner end of the pawl 232 is provided as an arc-shaped end surface, the arc-shaped end surface is in cambered surface sliding contact with the surface of the mandrel 21, and the outer end of the pawl 232 is abutted against the ratchet teeth 231.

Specifically, the elastic member 233 is an annular tightening clamp spring with an opening, the surface of the mandrel 21 is provided with an annular protrusion 211, the annular protrusion 211 is provided with a mounting groove 212 of the pawl 232, the annular protrusion 211 is provided with an annular groove 213 along the circumferential direction of the side surface thereof, the annular groove 213 is communicated with the mounting groove 212 of the pawl 232, an arc groove 214 is provided in the mounting groove 212 of the pawl 232, an arc-shaped end surface of the pawl 232 is provided in the arc groove 214, the pawl 232 is provided with a spring groove 234, the annular tightening clamp spring is clamped on the annular groove 213 and the spring groove 234, and the outer end of the pawl 232 is pushed outward on the ratchet teeth 231 under the elastic force of the annular tightening clamp spring.

The elastic member 233 is an annular tightening clamp spring with an opening, the mandrel 21 is provided with an annular protrusion 211, the annular protrusion 211 is provided with a mounting groove 212 of the pawl 232, the annular protrusion 211 is provided with an annular groove 213 along the circumferential direction of the side surface thereof, the annular groove 213 is communicated with the mounting groove 212 of the pawl 232, an arc groove 214 is provided in the mounting groove 212 of the pawl 232, an arc-shaped end surface of the pawl 232 is provided in the arc groove 214, the pawl 232 is provided with a spring groove 234, the annular tightening clamp spring is clamped on the annular groove 213 and the spring groove 234, and the outer end of the pawl 232 is pushed outward on the ratchet teeth 231 under the elastic force of the annular tightening clamp spring. Because the elastic force of the annular tightening clamp spring is applied to the inner end of the pawl 232, a force F is generated so that the inner end of the pawl 232 rotates inward and the outer end opens outward. This force causes the outer end of the pawl 232 can be rotated and opened outward with the inner end as a rotation center, thereby fixing the three pawls 232 in the corresponding mounting grooves 212 of the pawls 232 and keeping the outer end of the pawl 232 open outward. Therefore, the outer end of the pawl 232 opens outward under the elastic force of the annular tightening clamping spring and is pushed into the ratchet tooth 231.

Of course, the elastic member 233 may also be a torsion spring. One end of the torsion spring is abutted against the surface of mandrel 21, and the other end of the torsion spring is abutted against the outer end of the pawl 232. The outer end of the pawl 232 is pushed outward on the ratchet teeth 231 under the elastic force of the torsion spring.

Specifically, the ratchet mechanism comprises at least three pawls 232, and the three pawls 232 are evenly distributed along the circumferential direction of the surface of the mandrel 21.

Of course, the number of the pawls 232 may also be two, and the two pawls 232 may be symmetrically provided on the outer peripheral wall of the mandrel 21. Furthermore, the number of the pawls 232 may also be one, and a single pawl 232 can also realize the unidirectional torque transmission.

Specifically, the pawl 232 is comma-shaped.

The working principle of the ratchet mechanism of the present invention is as follows:
Under the tightening action of the annular tightening clamp spring, the three pawls 232 are always pushed into the ratchet teeth 231 in the normal state. When the user steps on the pedal of the bicycle forward to make the bicycle move forward, the mandrel 21 rotates in the forward direction, thereby driving the three pawls 232 on the mandrel 21 to rotate in the forward direction. The pawls 232 are meshed with the ratchet teeth 231 on the inner periphery of the five-way gear 22, thereby driving the five-way gear 22 to rotate, and then driving the rear hub 4 of the rear wheel of the electric bicycle through the front transmission gear 13, the transmission rod 11, and the rear transmission gear 14 (the gasket 42 of the rear hub gear 41 is sleeved on the rotating shaft of the rear hub 4, the rear hub gear 41 is meshed with the rear transmission gear 14, and a dust cover 43 also covers the rear hub gear 41). When the user steps on the pedal in the reverse direction, the mandrel 21 drives the pawl 232 to rotate in the reverse direction, and the three pawls 232 will rotate along the arc groove 214 under the squeezing action of the ratchet teeth 231 on the inner periphery of the five-way gear 22, and finally enter the mounting groove 212 of the pawl 232. At this time, the mandrel 21 and the five-way gear 22 are out of the transmission relationship, that is, the mandrel 21 can no longer transmit torque to the five-way gear 22, and thus cannot drive the five-way gear 22 to rotate. Once the mandrel 21 rotates in the forward direction again, the three pawls 232 will be pushed into the ratchet teeth 231 under the tightening action of the annular tightening clamp spring. The present invention can realize the unidirectional torque transmission of the mandrel 21 of the bicycle through the ratchet mechanism.

Specifically, the five-way gear 22, the front transmission gear 13, and the rear transmission gear 14 are all bevel gears. Of course, the five-way gear 22 and the front transmission gear 13 may also be driven by a straight bevel gear, that is, the five-way gear 22 is a bevel gear, and the front transmission gear 13 is a straight gear.

The left lock ring 26 is provided with an internal thread, the right cover 27 is provided with an external thread, and both ends of the five-way base body 24 are provided with corresponding external threads and internal threads, respectively. Through the split design, the five-way base realizes the detachable connection of the five-way base, which facilitates the replacement of internal parts, is more conducive to the fastening and operation of each component, and greatly reduces the situation of damage together. It is firmer in structure, more powerful in function, more convenient to mount, and is basically maintenance-free, which can ensure the normal use for more than five years without damage.

The rear end of the five-way gear 22 extends and is provided with an extended sleeve 28 sleeved on the surface of the mandrel 21, the extended sleeve 28 is rotatably connected to the five-way base body 24, and the front end of the five-way gear 22 and the rear end of the extended sleeve 28 are both rotatably connected to the inner wall of the five-way base body 24 through bearings, so that the five-way gear 22 is more balanced in force during operation and runs more smoothly.

Specifically, a connecting pipe 12 is provided on the outside of the transmission rod 11, both ends of the connecting pipe 12 are provided with a front joint 15 and a rear joint 16, respectively, and the connecting pipe 12 is fixedly connected to the five-way base body 24 and the rear gearbox 3 through the front joint 15 and the rear joint 16, respectively.

The connecting pipe 12 encircles the transmission rod 11 so that the transmission rod 11 can be prevented from being wet or impacted by external forces, the transmission rod 11 can be better protected, and the service life of the transmission rod 11 can be extended.

Specifically, both ends of the mandrel 21 are rotatably connected to the five-way base body 24 through bearings 51, oil seals 52 are sleeved on both ends of the mandrel 21, and the oil seals 52 are pressed between the bearing 51 and the five-way base body 24.

By providing an oil seal 52 between the bearing 51 and the five-way base body 24, it is possible to improve the air-tightness of the five-way base body 24 and prevent outside water vapor or pollution particles from entering the five-way base body 24, which is conducive to protecting the parts in five-way base body 24 and can ensure the performance of the parts and extend the service life of the parts.

Similarly, bearings 51 and oil seals 52 are also provided between both ends of the transmission rod 11 and the connecting pipe 12, which will not be described in detail herein again.

Specifically, a rotation speed sensor 29 is sleeved at one end of the mandrel 21 extending out of the five-way base body 24.

The function of the rotation speed sensor 29 is as follows: when a person wants to ride, the person steps on the pedal to drive the mandrel 21 to rotate, the rotation speed sensor 29 will rotate with the rotation of the mandrel 21, and the rotation speed sensor 29 will detect the speed of the rotation and will transmit the corresponding signal to the controller. The controller drives the motor backwards to output the current of different magnitudes. The larger the current, the faster the motor rotates. Therefore, the purpose of providing the rotation speed sensor 29 is to better understand the intention of the rider, so as to control the motor to achieve the adjustment of the driving speed.

The transmission shaft of an electric vehicle of the present invention is mounted on an electric bicycle and is used to drive the rear wheels of the electric vehicle to rotate.

The above embodiments merely describe the preferred embodiments of the present invention, rather than limit the scope of the present invention. Various modifications and improvements made to the technical solutions of the present invention by those skilled in the art without departing from the design spirit of the present invention shall fall within the protection scope determined by the claims of the present invention.

## Claims

1. A transmission shaft of an electric vehicle, comprising a transmission rod, a five-way base, and a rear gearbox, wherein the five-way base is provided with a mandrel, both ends of the transmission rod are provided with a front transmission gear and a rear transmission gear, respectively, and the front transmission gear is provided in the five-way base, wherein the five-way base comprises a five-way base body, a five-way base cylinder, a left lock ring, and a right cover, the five-way base cylinder is sleeved on the outer peripheral surface of the five-way base body, the left lock ring and the right cover are connected to both ends of the five-way base body, both ends of the mandrel protrude from the left lock ring and the right cover, respectively, a five-way gear is sleeved on the surface of the mandrel, the five-way gear is rotatably connected to the five-way base body and is meshed with a front transmission gear, a ratchet mechanism is provided between the mandrel and the five-way gear, the ratchet mechanism comprises a ratchet tooth, a pawl, and an elastic member, the inner peripheral surface of the five-way gear is provided with ratchet teeth, the pawl is provided on the surface of the mandrel by an elastic member, the pawl is abutted against the ratchet teeth, and one end of the five-way gear extends and is provided with an extended sleeve sleeved on the surface of the mandrel.

2. The transmission shaft of an electric vehicle according to claim 1, wherein an inner end of the pawl is provided as an arc-shaped end surface, the arc-shaped end surface is in cambered surface sliding contact with the surface of the mandrel, and the outer end of the pawl is abutted against the ratchet teeth.

3. The transmission shaft of an electric vehicle according to claim 2, wherein the elastic member is an annular tightening clamp spring with an opening, the surface of the mandrel is provided with an annular protrusion, the annular protrusion is provided with a mounting groove of the pawl, the annular protrusion is provided with an annular groove along the circumferential direction of the side surface thereof, the annular groove is communicated with the mounting groove of the pawl, an arc groove is provided in the mounting groove of the pawl, an arc-shaped end surface of the pawl is provided in the arc groove, the pawl is provided with a spring groove, the annular tightening clamp spring is clamped on the annular groove and the spring groove, and the outer end of the pawl is pushed outward on the ratchet teeth under the elastic force of the annular tightening clamp spring.

4. The transmission shaft of an electric vehicle according to claim 1, wherein the elastic member is a torsion spring, one end of the torsion spring is abutted against the surface of the mandrel, the other end of the torsion spring is abutted against the outer end of the pawl, and the outer end of the pawl is pushed outward on the ratchet teeth under the elastic force of the torsion spring.

5. The transmission shaft of an electric vehicle according to claim 2 or 3, wherein the ratchet mechanism comprises at least three pawls, and the three pawls are evenly distributed along the circumferential direction of the surface of the mandrel.

6. The transmission shaft of an electric vehicle according to claim 2 or 3, wherein the pawl is comma-shaped.

7. The transmission shaft of an electric vehicle according to claim 6, wherein a connecting pipe is provided on the outside of the transmission rod, and both ends of the connecting pipe are fixedly connected to the five-way base and the rear gearbox, respectively.

8. The transmission shaft of an electric vehicle according to claim 7, wherein: both ends of the mandrel are rotatably connected to the five-way base body through bearings, oil seals are sleeved on both ends of the mandrel, and the oil seals are pressed between the bearing and the five-way base body.

9. The transmission shaft of an electric vehicle according to claim 8, wherein the left lock ring is provided with an internal thread, the right cover is provided with an external thread, and both ends of the five-way base body are provided with corresponding external threads and internal threads, respectively.

10. The transmission shaft of an electric vehicle according to claim 9, wherein a rotation speed sensor is sleeved at one end of the mandrel extending out of the five-way base body.
